# EUROPÄISCHE PATENTANMELDUNG

(11) **EP 1 039 776 A1**
(43) Veröffentlichungstag der Anmeldung: **27.09.2000**
(21) Anmeldenummer: 99105873.6
(22) Anmeldetag: 23.03.1999
(51) Int. Cl.: H04Q 11/04

(54) **Schaltungsanordnung zum Bearbeiten eines ATM-Zellenkopfes**

(71) Anmelder: SIEMENS AKTIENGESELLSCHAFT, 80333 München (DE)
(72) Erfinder: Mariggis, Athanase, 81379 München (DE); Grigore, Elena, 80637 München (DE)

(57) **Zusammenfassung**

Bei zeitgemäßen Übertragungssystemen werden Informationen in ATM-Zellen übertragen, die über mehrere Kanäle heran-geführt werden (SDH). Beim Stand der Technik ist pro Kanal eine Bearbeitungsschaltung vorzusehen, in der eine für den Zellenkopf repräsentative Prüfinformation generiert, ausgewertet oder korrigiert wird. Die Erfindung reduziert die Anzahl der Bearbeitungsschaltungen, indem FIFO Speichereinrichtungen diesen vorgeschaltet werden, die den Zellenkopf betreffende Informationen aufnehmen und der Bearbeitungsschaltung zuführen, so daß eine Bearbeitungsschaltung den Zellenkopf von ATM-Zellen mehrerer Kanäle bearbeitet.

## Beschreibung

Die Erfindung betrifft eine Schaltungsanordnung gemäß dem Oberbegriff von Patentanspruch 1.

Bei zeitgemäßen Informationsverarbeitungssystemen werden Informationen in Paketen wie beispielsweise in ATM-Zellen oder IP Paketen übertragen. Eine ATM-Zelle besteht aus einem 5 Byte breiten Zellenkopf sowie einem 48 Byte breiten Informationsteil. Im Informationsteil werden die eigentlichen Nutzinformationen übertragen, während im Zellenkopf eine Adresse und weitere Zelleninformationen abgelegt sind. Für letztere sind insgesamt 4 Bytes zu reservieren. Im 5.Byte wird dann eine Prüfinformation mitübertragen, über die eine fehlerhafte Übertragung des Zellenkopfes ermittelt gegebenenfalls korrigiert werden kann.

Diese Prüfinformation ist als Teil des Zellenkopfes anzusehen, und wird als HEC Feld (HEC = Header Error Control) bezeichnet. In diesem 1 Byte breiten Feld ist eine komplexe Quersumme über die im Zellenkopf enthaltene Adresse abgelegt.

Generell ist der Zellenkopf vor dem Sendevorgang in der sendenden Einrichtung zu generieren und dem Informationsteil voranzustellen. Empfangsseitig wird der Zellenkopf in der empfangenden Einrichtung aufgenommen und die im Informationsteil übertragenen Nutzinformationen der unter der Adresse bezeichneten Einrichtung zugeführt. Zu diesem Zweck ist somit in der sendenden Einrichtung der ATM-Zellenkopf mit der Prüfinformation zu generieren und in der empfangenden Einrichtung auszuwerten, wobei Generierung und Auswertung der Prüfinformation standardisiert sind. Werden z. B. Übertragungsfehler ermittelt, so können diese - wenn auch in einem begrenzten Umfang - wieder korrigiert werden.

Generierung und Auswertung der Prüfinformation werden über speziell ausgebildete Schnittstellenschaltungen vorgenommen, die im folgenden als Headerbearbeitungsschaltungen oder kurz Bearbeitungsschaltungen bezeichnet werden. In der sendenden Einrichtung wird in der dort angeordneten Bearbeitungsschaltung somit die Prüfinformation generiert und in der empfangenden Einrichtung in der dort angeordneten Bearbeitungsschaltung ausgewertet. Die sendeseitig angeordnete Bearbeitungsschaltung weist somit eine Generierungsfunktion auf, während die empfangsseitig angeordnete Bearbeitungsschaltung eine Auswerte- und Korrigierfunktion aufweist. Da die Übertragung bidirektional erfolgt, weist jede sendende und empfangende Einrichtung beide Typen von Bearbeitungsschaltungen auf.

Die ATM-Zellen werden während des Übertragungsvorganges in der Regel in ein spezielles Übertragungsformat (z.B. SDH-Format, Synchrone Digitale Hierarchie) eingefügt, und an standardisierten Schnittstellen diesem wieder entnommen. Im Falle des SDH-Übertragungsformates sind dies STM Schnittstellen.

Eine einfache Form einer derartigen Schnittstelle ist die STM-1 Schnittstelle. Komplexere Schnittstellen sind als N*STM-1 Schnittstellen ausgebildet. Im Falle des Non Concatenated Mode (N > 1), in dem die ATM-Zellen einer Mehrzahl von Quellen über lediglich eine Strecke übertragen werden, bedeutet dies, daß die Bearbeitungsschaltungen mehrfach eingesetzt werden müssen. Beispielsweise werden bei der Übertragung von 4*STM-1 Signalen solche Signale auf ein STM-4 Signal umgesetzt. Dieses wird dann über die in Frage kommende Strecke geführt und empfangsseitig wieder in 4*STM-1 Signale umgesetzt. Dies bedeutet, daß pro STM-4 Kanal z. B. sendeseitig 4 Bearbeitungsschaltungen anzuordnen sind. Gleiches gilt für die in der empfangenden Einrichtung angeordneten Bearbeitungsschaltungen. Bei Schnittstellen höherer Ordnung (z.B. STM-16 etc.) steigt damit die Vielzahl der Bearbeitungsschaltungen drastisch an. Damit ergeben sich aber nicht nur Probleme mit der Komplexität des gesamten Übertragungssystems (z.B. erhöhte Fehleranfälligkeit), zumal jede Bearbeitungsschaltung selbst bereits ein erhöhtes Maß an Komplexität aufweist, sondern auch mit einer erhöhten Leistungsaufnahme der Bausteine in den Schnittstellen und einer damit verbundenen Erwärmung. Weiterhin ist damit ein erhöhter Kostenaufwand verbunden.

Der Erfindung liegt die Aufgabe zugrunde, eine Schaltungsanordnung anzugeben, mit der die Vielzahl der Bearbeitungsschaltungen auf ein praktikables Maß reduziert wird.

Die Erfindung wird, ausgehend vom Oberbegriff von Patentanspruch 1, durch die im kennzeichnenden Teil angegebenen Merkmale gelöst. Der Vorteil der Erfindung ist darin zu sehen, daß die Bearbeitungsschaltungen mit weiteren Einrichtungen derart beschaltet werden, daß die Bearbeitungsschaltungen für mehrere Kanäle lediglich einmal vorzusehen sind.Dies bedeutet beispielsweise im Falle einer STM-4 Schnittstelle mit 4 Kanälen, daß anstelle von 4 Bearbeitungsschaltungen beim Stand der Technik lediglich 1 Bearbeitungsschaltung vorzusehen ist. Somit werden 3 komplexe Bearbeitungsschaltungen im Falle von STM-4nc Signalen eingespart.

Vorteilhafte Weiterbildungen der Erfindung sind in den Unteransprüchen angegeben.

Die Erfindung wird im folgenden anhand eines figürlich dargestellten Ausführungsbeispieles näher erläutert.

Es zeigen:
- Fig 1: die empfangsseitge Übertragung von STM-4 Signalen im Non Concatenated Mode
- Fig 2: die erfindungsgemäße Schaltungsanordnung

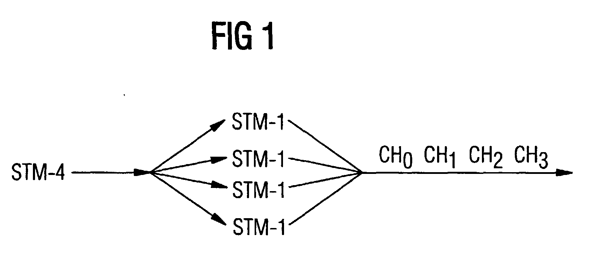

In Fig. 1 ist die Übertragung von STM-4 Signalen im Non Concatenated Mode aufgezeigt. Die Pakete sind dabei als ATM-Zellen ausgebildet und in STM-1 Signale eingebettet. Die 4*STM-1 Signale werden in einem STM-4 Signal zusammengefaßt. Empfangsseitig ist das STM-4 Signal wieder in jeweils 4*STM-1 Signale zurückzuführen.

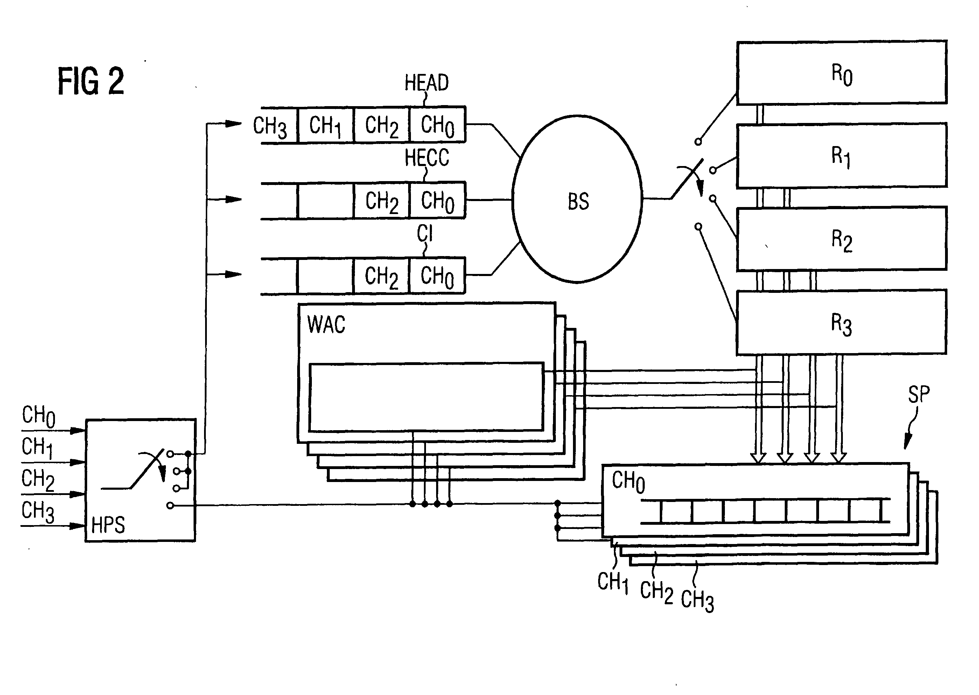

Im folgenden wird nun die Funktionsweise der Schaltungsanordnung gemäß Fig. 2 näher erläutert. Demgemäß werden ATM-Zellen über eine SDH-Schnittstelle zugeführt. Beispielhaft sollen STM-4 Signale übertragen werden. Diese werden im folgenden als 4 STM-1 Signale über Kanäle CH₀...CH₃ zugeleitet. Weiterhin wird davon ausgegangen, daß die ATM-Zellen einer empfangenden Einrichtung zugeführt werden. In diesem Fall ist die Bearbeitungsschaltung derart ausgebildet, daß der Zellenkopf der eintreffenden ATM-Zelle auf korrekte Übertragung hin überprüft wird. Die Bearbeitungsschaltung weist somit Auswerte- und Korrigierfunktion auf und ist als solche bekannt und nicht Gegenstand der Erfindung, weswegen auf eine detaillierte Funktionsweise nicht näher eingegangen wird.

Die ATM-Zellen werden also zunächst über die 4 Kanäle CH₀...CH₃ einer Separiereinrichtung HPS (Header Payload Separation) zugeführt. Dort wird der ATM-Zellenkopf vom Informationsteil separiert. Die Nutzinformationen (Payload) werden in einen nachfolgend angeordneten Zellenspeicher SP eingeschrieben, wobei eine Zähleinrichtung WAC (Write-Adress-Counter) die Information darüber generiert und speichert, wo der Informationsteil einer jeden ATM-Zelle abgelegt ist. Diese Information ist insofern notwendig, da später der bearbeitete ATM-Zellenkopf dem Informationsteil wieder vorangestellt wird und die ATM-Zelle weitergeleitet wird.

Die den in der Separiereinrichtung HPS eintreffenden ATM-Zellen zugehörigen Zellenköpfe werden nun in der Reihenfolge des Eintreffens in einer FIFO Speichereinrichtung HEAD abgelegt.

Beispielhaft sei angenommen, daß im Kanal CH₀ eine ATM-Zelle als erste in der Separiereinrichtung HPS eintrifft. Demzufolge wird der separierte ATM-Zellenkopf an die erste Stelle der FIFO Speichereinrichtung HEAD eingeschrieben. Als nächstes soll eine ATM-Zelle im Kanal CH₂ in der Separiereinrichtung HPS eintreffen. Der zugehörige ATM-Zellenkopf wird in der FIFO Speichereinrichtung HEAD unmittelbar hinter dem bereits gespeicherten Zellenkopf der ATM-Zelle des Kanals CH₀ abgelegt. In gleicher Weise werden die ATM-Zellenköpfe der den Kanälen CH₁, CH₃ zugehörigen ATM-Zellen in der FIFO Speichereinrichtung HEAD abgespeichert. Jeder ATM-Zellenkopf benötigt 4 Byte Speicherplatz.

Mit dem ATM-Zellenkopf wird auch die 1 Byte breite Prüfinformation HEC vom Informationsteil separiert und in einer weiteren FIFO Speichereinrichtung HECC abgelegt. Das Speichern erfolgt in der selben Reihenfolge wie das Speichern der Zellenköpfe in der FIFO Speichereinrichtung HEAD. Demzufolge wird die Prüfinformation HEC der im Kanal CH₀ eingetroffenen ATM-Zelle ebenfalls an erster Stelle der FIFO Speichereinrichtung HECC abgelegt.

Letzlich ist noch eine dritte FIFO Speichereinrichtung CI (Channel Identifier) angeordnet. Hier werden Informationenen darüber abgelegt, zu welchem Kanal die im den FIFO Speichereinrichtungen HEAD und HECC abgelegten Informationen zugeordnet sind. Dies ist insofern notwendig, da den dort gespeicherten Informationen nicht angesehen werden kann, welcher ATM-Zelle von welchem Kanal sie entstammen. Im vorliegenden Ausführungsbeispiel signalisiert die an erster Stelle der FIFO Speichereinrichtung CI abgelegte Information, daß die in den FIFO Speichereinrichtungen HEAD und HECC abgelegten Informationen dem Kanal CH₀ zugeordnet sind.

Der im ersten Feld der FIFO Speichereinrichtung HEAD gespeicherte Zellenkopf, der gemäß vorliegendem Ausführungsbeispiel dem Kanal CH₀ zugeordnet sein soll, wird nun der Bearbeitungsschaltung BS als Eingangsparameter zugeführt. Zeitgleich hierzu wird als zweiter Eingangsparameter die Prüfinformation HEC zugeführt.

ATM-Zellenkopf und Prüfinformation HEC werden nun in der Bearbeitungsschaltung BS logisch verknüpft und daraufhin untersucht, ob der Zellenkopf korrekt übertragen wurde. Ist dies der Fall, wird der ATM-Zellenkopf unverändert in nachfolgenden Einrichtungen abgelegt. Diese sind als kanalindividuelle Register R₀...R₃ ausgebildet. Hierbei wird der ATM-Zellenkopf von Kanal CH₀ in Register R₀, der ATM-Zellenkopf von Kanal CH₁ in Register R₁ etc. abgelegt. Hierbei wird die in der FIFO Speichereinrichtung CI abgelegte Information als Kriterium dafür genommen, in welches der Register R₀...R₃ der ATM-Zellenkopf abzulegen ist. Gemäß vorliegendem Ausführungsbeispiel wird somit der von der Bearbeitungsschaltung BS überprüfte ATM-Zellenkopf in Register R₀ abgelegt. Ist dieser Bearbeitungsvorgang abgeschlossen, werden die in den FIFO Speichereinrichtungen HEAD, HCC abgelegten Informationen von der Bearbeitungsschaltung BS übernommen und in gleicher Weise bearbeitet.

In den kanalindividuellen Registern R₀...R₃ werden noch weitere Informationen abgelegt. So wird hier neben dem ATM-Zellenkopf die zugehörige Prüfinformation HEC sowie eine Header Information gespeichert. In letzterer werden insgesamt 3 Informationen geführt. Zum einen ist hier gespeichert, ob der ATM-Zellenkopf korrekt übertragen wurde oder nicht. Zum anderen wird hier noch eine Information darüber geführt, ob, falls das letztere zutrifft, der ATM-Zellenkopf korrigierbar ist oder nicht. Diese letzte Information ist für das Zusammenfügen von Informationsteil und ATM-Zellenkopf ein wesentlicher Aspekt. Ist der ATM-Zellenkopf nicht korrigierbar, wird die gesamte ATM-Zelle verworfen.

Der Informationsteil der ATM-Zellen wurde - wie bereits angesprochen - nach Verlassen der Separiereinrichtung HPS unter Steuerung der Zähleinrichtung WAC in einem Zellen-speicher SP abgelegt. Hier sind somit die Informationsteile der separierten ATM-Zellen gespeichert. Das Speichern erfolgt dadurch, daß zunächst die Bytes 6 bis 53 des Informationsteiles gespeichert werden. Weiterhin werden im Zellenspeicher SP unmittelbar vor dem Informationsteil die Bytes 1 bis 5 zum späteren Speichern des (gegebenenfalls korrigierten) Zellenkopfes sowie der Prüfinformation HEC reserviert.

Unter der Steuerung der Zähleinrichtung WAC werden nun die Zellenköpfe unmittelbar vor die Nutzinformationen (Payload) gespeichert. Dies sind zunächst die Bytes 1...4, die eine Adresse spezifizieren. Ferner wird die Prüfinformation HEC auf Byte 5 gespeichert. Falls der Zellenkopf in nicht korrigierbarer Weise während es Übertragungsvorganges verfälscht wurde, wird diese Zelle verworfen, indem der Speicherbereich, in dem momentan die diesem Zellenkopf zugehörigen Nutzinformationen abgelegt sind freigegeben wird, um mit dem Informationsteil der nachfolgenden Zelle überschrieben zu werden. Die nun vollständigen ATM-Zellen werden dann aus dem Zellen-speicher SP ausgelesen und weiteren Einrichtungen zugeführt.

Beim Stand der Technik wird darüberhinaus zuerst der Zellenkopf bearbeitet und anschließend erst der Informationsteil zu dem bearbeiteten Zellenkopf hinzugefügt. Dies hat den Nachteil, daß das Hinzufügen des Informationsteiles verzögert vorzunehmen ist, da die Bearbeitung des Zellenkopfes sehr viel mehr Zeit in Anspruch nimmt, als das Übertragen und Speichern des Informationsteiles. Schaltungstechnisch bedeutet dies, daß über spezielle HW-Einrichtungen Delayzyklen einzufügen sind. Durch die im Ausführungsbeispiel vorgeschlagene umgekehrte Vorgehensweise - also zuerst Speichern des Informationsteiles und anschließendes Hinzufügen des bearbeiteten Zellenkopfes - werden diese Delayzyklen mit den dazugehörigen speziellen HW-Einrichtungen eingespart.

Bei vorliegendem Ausführungsbeispiel wurde davon ausgegangen, daß die Bearbeitungsschaltung BS Auswerte- und Korrigierfunktion aufweist. Dies bedeutet jedoch keine Einschränkung, da die Bearbeitungsschaltung BS ebenso Generierfunktion aufweisen kann und in gleicher Weise gemäß Fig.2 mit den FIFO Speichereinrichtungen HEAD, HECC, CI sowie den Registern beschaltet werden kann. In diesem Fall entfällt allerdings die in den kanalindividuellen Registern R₀...R₃ abgelegte Header Information.

## Patentansprüche

1. Schaltungsanordnung zum Bearbeiten eines Paketkopfes, mit einer Übertragungseinrichtung, die Pakete in einer Mehrzahl von Kanälen (CH₀...CH₃) einer weiteren Übertragungseinrichtung zuleitet, und mit
wenigstens einer Bearbeitungsschaltung (BS), die jeweils in einer der Übertragungseinrichtungen angeordnet ist und die den Paketkopf eines jeden Paketes nach Maßgabe einer Prüfinformation (HEC) bearbeitet,
**dadurch gekennzeichnet,**
daß wenigstens eine Speichereinrichtung (HEAD, HCC, CI) vorgesehen ist, die den Paketkopf betreffende Informationen in der Reihenfolge des Eintreffens der über die Mehrzahl von Kanälen (CH₀...CH₃) geführten Pakete speichert, und daß die Bearbeitungsschaltung (BS) diese Informationen entgegennimmt, bearbeitet und nach Maßgabe des Bearbeitungsergebnisses die Pakete weiterleitet.

2. Schaltungsanordnung nach Anspruch 1,
**dadurch gekennzeichnet,**
daß die Bearbeitungsschaltung (BS) eine Generierungsfunktion aufweist ,mittels der die über den Paketkopf ermittelte Prüfinformation (HEC) ermittelt und im Paketkopf abgelegt wird.

3. Schaltungsanordnung nach Anspruch 1,
**dadurch gekennzeichnet,**
daß die Bearbeitungsschaltung (BS) eine Auswerte- und Korrigierfunktion aufweist, mittels der der Paketkopf mit der mitübertragenen Prüfinformation (HEC) logisch verknüpft und nach Maßgabe des Ergebnisses gegebenenfalls korrigiert wird.

4. Schaltungsanordnung nach Anspruch 1 oder 2,
**dadurch gekennzeichnet,**
daß die den Paketkopf betreffenden Informationen eine Adreßinformation, die Prüfinformation (HEC) sowie eine kanalspezifische Information sind.

5. Schaltungsanordnung nach Anspruch 1 bis 4,
**dadurch gekennzeichnet,**
daß die wenigstens eine Speichereinrichtung (HEAD, HCC, CI) als FIFO Speichereinrichtung ausgebildet ist.

6. Schaltungsanordnung nach einem der vorstehenden Ansprüche,
**dadurch gekennzeichnet,**
daß eine Separiereinrichtung (HPS) vorgesehen ist, in der die Pakete in Paketkopf und Informationsteil separiert werden.

7. Schaltungsanordnung nach einem der vorstehenden Ansprüche,
**dadurch gekennzeichnet,**
daß in einer Steuereinrichtung (WAC) Informationen über die Zuordnung eines Paketkopfes zu dem korrespondiernden Informationsteil geführt werden.

8. Schaltungsanordnung nach einem der vorstehenden Ansprüche,
**dadurch gekennzeichnet,**
daß ein Zellenspeicher (SP) zur Aufnahme des separierten Informationsteils der Pakete vorgesehen ist, in dem zusätzlich Speicherplatz für die Aufnahme des bearbeiteten Paketkopfes vorgehalten wird.

9. Schaltungsanordnung nach einem der vorstehenden Ansprüche,
**dadurch gekennzeichnet,**
daß die Pakete als ATM-Zellen ausgebildet sind.
